# EUROPÄISCHE PATENTSCHRIFT

(11) **EP 1 195 187 B1**
(45) Veröffentlichungstag und Bekanntmachung des Hinweises auf die Patenterteilung: **09.06.2004**
(21) Anmeldenummer: 00121413.9
(22) Anmeldetag: 29.09.2000
(51) Int. Cl.: B01D 46/42, B01D 46/24, F01N 3/022, F01N 3/027

(54) **Filtereinrichtung**
Filtration device
Dispositif de filtration

(43) Veröffentlichungstag der Anmeldung: 10.04.2002
(73) Patentinhaber: Thomas Josef Heimbach Gesellschaft mit beschränkter Haftung, 52353 Düren (DE)
(72) Erfinder: Best, Walter, Dr., 52351 Düren (DE); Schumacher, Uwe Dr., 47918 Tönisvorst (DE)
(74) Vertreter: Paul, Dieter-Alfred, Dipl.-Ing.

(56) Entgegenhaltungen:
- US-A- 5 207 807
- US-A- 5 259 190
- US-A- 5 449 541

## Beschreibung

Die Erfindung betrifft eine Filtereinrichtung mit Filterelementen aus Keramikmaterial, welche zu wenigstens einer Filterelementgruppe zusammengefaßt sind, in der die Filterelemente Seite an Seite aneinanderliegen und parallel durchströmbar sind, wobei jede Filterelementgruppe erste und zweite Filterelemente aufweist und das bzw. die erste(n) Filterelemente elektrische Anschlüsse für die Verbindung mit einer elektrischen Energiequelle aufweisen und aus elektrisch leitfähigem Keramikmaterial besteht bzw. bestehen.

Für die Heißgasfiltration, beispielsweise die Filtration von Dieselmotorabgasen, werden zunehmend Filterelemente aus porösem Keramikmaterial verwendet, wobei sich hier insbesondere das SiC-Keramikmaterial bewährt, das in der EP-A-0 796 830 beschrieben ist. Es ist chemisch stabil und hat eine hohe Wärmeleitfähigkeit sowie Temperaturund Temperaturwechselbeständigkeit. Wie z.B. aus der wo 93/13303, der EP-A-1 013 328 und der gattungsbildenden US-A-5449541 zu entnehmen ist, werden solche Filterelemente zu einer Filterelementgruppe oder mehreren davon zusammengefaßt, in der die Filterelemente Seite an Seite aneinanderliegen und parallel durchströmt werden. Zwischen den Filterelementen befinden sich Kontaktschichten aus bei Einwirkung von Hitze expandierendem Material. Die Filterelementgruppen sind von Gehäusen umgeben, die gegebenenfalls austauschbar sein können.

Für den Einsatz an Dieselmotoren ist es wichtig, daß die sich am oder im Filterelement abgelagerten Rußteilchen in regelmäßigen Abständen entfernt werden, damit der Durchströmwiderstand insbesondere in den filterwirksamen Wandungen des Filterelements nicht zu hoch wird. Eine bekannte Abreinigungsmethode besteht darin, die Filterelemente durch Anlegen eines elektrischen Stroms so stark aufzuheizen, daß sich die Rußteilchen entzünden und abbrennen (vgl. WO 93/13303, EP-A-0 943 593, US-A-5,449,541). Für diesen Zweck kann dem Keramikmaterial ein geeigneter elektrischer Widerstand gegeben werden (vgl. EP-A-0 796 830). Damit ein möglichst widerstandsarmer Stromübergang gewährleistet ist, sind besondere elektrische Anschlüsse erforderlich, wie sie beispielsweise in der EP-A-0 943 593 beschrieben sind.

In der US 4,505,107 ist eine Filtereinrichtung beschrieben, die in einem Filtergehäuse ein Filterelement aus porösem Keramikschaum enthält. An dessen Stirnseite ist eine Heizeinrichtung vorgesehen, die aus einem Heizgitter aus elektrisch leitfähigem Keramikmaterial besteht, das mit einer Mehrzahl von elektrischen Anschlüssen versehen ist, wobei jeweils zwei Anschlüsse an einem Stromkreis liegen. Auf diese Weise kann das Heizgitter nacheinander sektionsweise mit Strom beaufschlagt und damit erhitzt werden. Statt des Heizgitters können auch eine Mehrzahl von über die Stirnfläche des Filterelements verteilte Heizelemente mit Keramikbeschichtung vorgesehen sein, die ebenfalls nacheinander mit elektrischem Strom beaufschlagt werden.

Die elektrische Abreinigung bzw. Regeneration hat einen nicht unerheblichen Installations- und Steuerungsaufwand zur Folge. Deshalb gehen die Bestrebungen dahin, auf diese Art Abreinigung zu verzichten und die Abreinigung durch das Abgas selbst vorzunehmen, beispielsweise indem die Abgastemperatur erhöht oder künstlich NO₂ erzeugt wird, das den Ruß durch höhere Oxidation im wesentlichen in CO₂ überführt. Eine solche Abreinigung läßt sich jedoch nicht bei allen Betriebszuständen zuverlässig erreichen. Insbesondere bei geringer Drehzahl, geringer Last oder im Kurzstreckenbetrieb kann das Abgas nicht so konditioniert werden, daß eine Verbrennung des Rußes bewirkt wird. Halten diese Betriebszustände längere Zeit an, kommt es zu Verstopfungen oder zumindest zu einem erheblichen Abgasgegendruck, der eine Leistungsminderung und eine Erhöhung des Kraftstoffverbrauchs zur Folge hat.

Der Erfindung liegt deshalb die Aufgabe zugrunde, eine Filtereinrichtung der eingangs genannten Art so auszubilden, daß eine Rußabreinigung auch bei Betriebszuständen möglich ist, bei denen eine Abreinigung über das Abgas nicht gelingt.

Diese Aufgabe wird erfindungsgemäß dadurch gelöst, daß die zweiten Filterelemente aus einem Keramikmaterial bestehen, das elektrisch nicht oder geringer leitfähig leitfähig ist als das Keramikmaterial der ersten Filterelemente.

Grundgedanke der Erfindung ist es, zwar eine elektrische Abreinigung vorzusehen, diese jedoch hauptsächlich auf einen Teil der Filterelemente zu beschränken und demgemäß den apparativen Aufwand vergleichsweise gering zu halten. Dem liegt die schon zur Erfindung gehörende Überlegung zugrunde, daß das Abgasvolumen gerade bei den Betriebszuständen, in denen eine Verbrennung des Rußes über das Abgas nicht gelingt, relativ gering ist und demgemäß schon eine Teilabreinigung ausreicht, um für einen ausreichend geringen Abgasgegendruck zu sorgen. Eine Vollregenerierung stellt sich dann ein, wenn der Dieselmotor warmgelaufen ist und höhere Lastzustände gefordert werden. Die beiden Abreingungsmethoden ergänzen sich auf diese Weise bei geringem apparativen Aufwand.

In Ausbildung der Erfindung ist vorgesehen, daß die an dem bzw. den ersten Filterelement(e) anliegenden zweiten Filterelemente elektrisch leitfähigen Kontakt zu dem bzw. den ersten Filterelement(en) hat. Auf diese Weise kann eine Mitaufheizung der zweiten Filterelemente bewirkt werden. Durch entsprechende Auslegung der elektrischen Leitfähigkeit der ersten und zweiten Filterelemente sowie des Übergangs zwischen beiden kann die Mitaufheizung den jeweiligen Anforderungen maßgeschneidert angepaßt werden.

Der Grundgedanke der Erfindung läßt sich aber auch dadurch verwirklichen, daß die ersten von den zweiten Filterelementen durch Kontaktschichten getrennt sind, die elektrisch nicht oder geringer leitfähig sind als das Keramikmaterial der ersten Filterelemente. Durch Material und Dicke der Kontaktschichten kann der elektrische und der Wärmeleitwiderstand und damit letztendlich die Mitaufheizung der zweiten Filterelemente in dem jeweils gewünschten Maße beeinflußt werden. Sofern die Mitaufheizung nicht nur durch Wärmeleitung bewirkt werden soll, können statt nicht elektrisch leitfähiger Kontaktschichten auch elektrisch leitfähige Kontaktschichten vorgesehen sein, wobei sich Kontaktschichten, wie sie in der EP-A-943 593 beschrieben sind, bewährt haben.

Es versteht sich, daß beide Ausgestaltungen des Grundgedankens der Erfindung auch miteinander kombiniert werden können, indem nicht elektrisch leitfähige zweite Filterelemente mit nicht elektrisch leitfähigen Kontaktschichten kombiniert werden und eine Mitaufheizung allenfalls durch Wärmeleitung bewirkt wird, oder indem elektrisch leitfähige zweite Filterelemente mit elektrisch leitfähigen Kontaktschichten kombiniert werden, wobei die Mitaufheizung durch Auslegung der elektrischen Leitfähigkeit der zweiten Filterelementen und der Kontaktschichten maßgeschneidert, d.h. den jeweiligen Anforderungen angepaßt werden kann.

Die Kontaktschichten sind zweckmäßigerweise aus dem gleichen Keramik-Grundmaterial hergestellt wie die Filterelemente. Sie sollten die Filterelemente miteinander verbinden, wobei die Kontaktschichten auch als separate Schichten ohne Materialverbindung mit den Filterelementen ausgebildet sein können. In diesem Fall werden die Filterelemente durch ein sie umgebendes Gehäuse zusammengehalten.

Die Wärmeleitfähigkeit der Kontaktschichten kann im wesentlichen gleich der der ersten oder zweiten Filterelemente sein.

In weiterer Ausbildung der Erfindung ist vorgesehen, daß das bzw. die erste(n) Filterelement(e) mittig angeordnet ist bzw. sind, weil dort die Energieumsetzung besonders effektiv ist. Es besteht jedoch auch die Möglichkeit, daß die ersten Filterelemente in der Filterelementgruppe verteilt angeordnet sind, wodurch eine höhere Flexibilität erreichbar ist. In diesem Fall besteht die Möglichkeit, durch eine entsprechende Schaltung die Filterelemente abwechselnd abzureinigen.

Nach einem weiteren Merkmal der Erfindung ist vorgesehen, daß die Wärmeleitfähigkeit der zweiten Filterelemente größer oder kleiner als die des bzw. der ersten Filterelements bzw. Filterelemente ist. Hierdurch kann die Mitaufheizung der zweiten Filterelemente entsprechen eingestellt werden.

In weiterer Ausgestaltung der Erfindung ist vorgesehen, daß die Filterelemente nebeneinander und sich abwechselnd Einströmkanäle und Ausströmkanäle aufweisen, die durch poröse, filterwirksame Längswandungen getrennt sind, wobei die Einströmkanäle einströmseitig offen und abströmseitig geschlossen und die Ausströmkanäle einströmseitig geschlossen und abströmseitig offen sind. Bewährt haben sich Einström- und Ausströmkanäle mit rechteckigem, insbesondere quadratischem Querschnitt. Dabei sollten die Außenwandungen der Filterelemente partikeldicht, insbesondere gasdicht ausgebildet sein. Die Filterelemente können rechteckigen, quadratischen, ovalen, runden und/oder schalenförmigen Querschnitt haben.

Die Filterelementgruppe (n) ist zweckmäßigerweise von einem Gehäuse mit einem Gasein- und Gasauslaß umschlossen, wobei jede Filterelementgruppe von einem eigenen Gehäuse umgeben sein kann, wenn mehrere Filterelementgruppen vorhanden sind. Eine entsprechende Ausbildung ist beispielsweise der EP 1 013 328 A2 zu entnehmen.

In der Zeichnung ist die Erfindung anhand von Ausführungsbeispielen näher veranschaulicht. Es zeigen:
- Figur 1: eine erste Filterelementgruppe in der Stirnansicht;
- Figur 2: eine zweite Filterelementgruppe in der Stirnansicht und
- Figur 3: eine dritte Filterelementgruppe in der Stirnansicht.

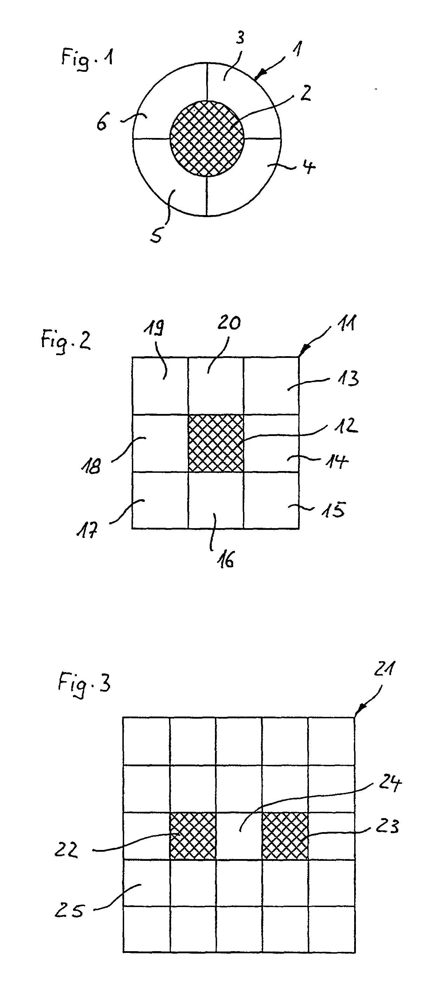

Die in Figur 1 dargestellte Filterelementgruppe 1 weist ein erstes, im Querschnitt kreisrundes Filterelement 2 aus einem elektrisch leitfähigen Keramikmaterial auf, das von vier schalenförmigen zweiten Filterelementen aus Keramikmaterial umgeben ist. Sämtliche Filterelemente 2, 3, 4, 5 werden axial durchströmt, d.h. senkrecht zur Zeichnungsebene. Hierzu weisen sie in an sich bekannter Weise nebeneinander und abwechselnd Einström- und Ausströmkanäle auf, die durch poröse filterwirksame Längswandungen getrennt sind, wobei die Einströmkanäle einströmseitig - hier stirnseitig - offen und abströmseitig geschlossen und die Ausströmkanäle einströmseitig geschlossen und abströmseitig offen sind. Dies ist hier nicht näher dargestellt. Die Ein- und Ausströmkanäle sind schachbrettartig angeordnet.

Das zentrale erste Filterelement 2 ist - was hier nicht näher dargestellt ist - an beiden stirnseitigen Enden mit elektrischen Anschlüssen versehen, wie sie in der EP 0 943 593 A1 beschrieben sind. Das erste Filterelement 2 kann an einen Stromkreis angeschlossen und deshalb mit Strom beaufschlagt werden. Der elektrische Widerstand des ersten Filterelements 2 ist so bemessen, daß es sich bei Strombeaufschlagung derart erhitzt, daß Ruß, der sich dort abgesetzt hat, verbrennt.

Die zweiten Filterelemente 3, 4, 5, 6 liegen an dem ersten Filterelement 2 über eine hier nicht näher dargestellte Kontaktschicht an. Sie haben keine elektrischen Anschlüsse. Je nach Art der Kontaktschichten und der Wärmeleitfähigkeit der zweiten Filterelemente 3, 4, 5, 6 werden diese bei Strombeaufschlagung des ersten Filterelements 2 mitaufgeheizt, wobei die Aufheizung auch so weit gehen kann, daß auch bei diesen Filterelementen 3, 4, 5, 6 ein zumindest teilweises Abbrennen des Rußes erfolgt. Sofern dies gefördert werden soll, können auch die zweiten Filterelemente 3, 4, 5, 6 aus einem elektrisch leitfähigen Keramikmaterial hergestellt werden.

Die Filterelementgruppe 1 ist dazu bestimmt, in das Filtergehäuse einer Filtereinrichtung eingebaut zu werden, wobei die Filtereinrichtung dann in der Abgasanlage eines Dieselmotors installiert wird. Gewöhnlich geschieht die Rußabreinigung durch entsprechende Abgasbehandlung, beispielsweise Erhöhung der Abgastemperatur auf ein Niveau, bei dem der Ruß verbrennt. Wird das betreffende Fahrzeug nur mit geringer Last oder im Kurzstreckenbetrieb eingesetzt, besteht die Gefahr, daß Betriebszustände, bei denen die Abgastemperatur zum Verbrennen des Rußes ausreicht, nicht erreicht werden. In diesem Fall wird elektrischer Strom auf das erste Filterelement 2 gegeben, so daß es sich auf eine Temperatur erhitzt, bei der der Ruß verbrennt.

Das Ausführungsbeispiel gemäß Figur 2 zeigt eine Filterelementgruppe 11, in dem zentral ein erstes Filterelement 12 angeordnet ist, das von acht zweiten Filterelementen 13 bis 20 umgeben ist. Im Unterschied zu der Ausführungsform gemäß Figur 1 haben hier die Filterelemente 12 bis 20 quadratischen Querschnitt, so daß auch die Filterelementgruppe 11 einen quadratischen Querschnitt aufweist. Bis auf die abweichenden Querschnitte gilt die Beschreibung zu dem Ausführungsbeispiel gemäß Figur 1.

In Figur 3 ist ein weiteres Ausführungsbeispiel einer Filterelementgruppe 21 dargestellt, bei dem zwei erste Filterelemente 22, 23 im Abstand zueinander und getrennt durch ein zweites Filterelement 24 angeordnet sind. Die ersten Filterelemente 22, 23 sind umgeben von weiteren zweiten Filterelementen - beispielhaft mit 25 bezeichnet -, so daß sich insgesamt ein quadratischer Querschnitt für die Filterelementgruppe 21 ergibt. Die Filterelemente 22, 23, 24, 25 selbst haben ebenfalls quadratischen Querschnitt.

Was die ersten und zweiten Filterelemente 22, 23, 24, 25 ansonsten angeht, kann auf die Beschreibung der Filterelemente 2 bis 6 gemäß Figur 1 Bezug genommen werden. Bei der Filterelementgruppe 21 besteht die Möglichkeit, die Abreinigung der ersten Filterelemente 22, 23 unabhängig voneinander und zeitlich versetzt durchzuführen, indem eine entsprechende Schaltung vorgesehen wird.

## Patentansprüche

1. Filtereinrichtung mit Filterelementen (2 bis 6; 12 bis 20; 22 bis 25) aus Keramikmaterial, welche zu wenigstens einer Filterelementgruppe (1, 11, 21) zusammengefaßt sind, in der die Filterelemente (2 bis 6, 12 bis 20; 22 bis 25) Seite an Seite aneinanderliegen und parallel durchströmbar sind, wobei jede Filterelementgruppe (1, 11, 21) erste und zweite Filterelemente (2 bis 6; 12 bis 20; 22 bis 25) aufweist und das bzw. die erste(n) Filterelement(e) (2, 12, 22, 23) elektrische Anschlüsse für die Verbindung mit einer elektrischen Energiequelle aufweisen und aus elektrisch leitfähigem Keramikmaterial besteht bzw. bestehen, **dadurch gekennzeichnet, daß** die zweiten Filterelemente (3 bis 6; 13 bis 20; 24, 25) aus einem Keramikmaterial bestehen, das elektrisch nicht oder geringer leitfähig ist als das Keramikmaterial der ersten Filterelemente (2, 12, 22, 23).

2. Filtereinrichtung nach Anspruch 1, **dadurch gekennzeichnet, daß** die an dem bzw. den ersten Filterelement(e) (2, 12, 22, 23) anliegenden zweiten Filterelemente (3 bis 6; 13 bis 20; 24, 25) elektrisch leitfähigen Kontakt zu dem bzw. den ersten Filterelement(en) (2, 12, 22, 23) hat bzw. haben.

3. Filtereinrichtung mit Filterelementen (2 bis 6; 12 bis 12; 22 bis 25) aus Keramikmaterial, welche zu wenigstens einer Filterelementgruppe (1, 11, 21) zusammengefaßt sind, in der die Filterelemente (2 bis 6, 12 bis 20; 22 bis 25) Seite an Seite aneinanderliegen und parallel durchströmbar sind, wobei jede Filterelementgruppe (1, 11, 21) erste und zweite Filterelemente (2 bis 6; 12 bis 20; 22 bis 25) aufweist und das bzw. die erste(n) Filterelement(e) (2, 12, 22, 23) elektrische Anschlüsse für die Verbindung mit einer elektrischen Energiequelle aufweisen und aus elektrisch leitfähigem Keramikmaterial besteht bzw. bestehen, **dadurch gekennzeichnet, daß** die ersten von den zweiten Filterelementen (2 bis 6; 12 bis 20; 22 bis 25) durch Kontaktschichten getrennt sind, die elektrisch nicht oder geringer leitfähig sind als das Keramikmaterial der ersten Filterelemente (2, 12, 22, 23).

4. Filtereinrichtung nach Anspruch 3, **dadurch gekennzeichnet, daß** die Kontaktschichten aus dem gleichen Keramikgrundmaterial bestehen wie die Filterelemente (2 bis 6; 12 bis 20; 22 bis 25).

5. Filtereinrichtung nach Anspruch 3 oder 4, **dadurch gekennzeichnet, daß** die Kontaktschichten die Filterelemente (2 bis 6; 12 bis 20; 22 bis 25) verbinden.

6. Filtereinrichtung nach einem der Ansprüche 3 bis 5, **dadurch gekennzeichnet, daß** die Kontaktschichten als separate Schichten ohne Materialverbindung mit den Filterelementen (2 bis 6; 12 bis 20; 22 bis 25) ausgebildet sind.

7. Filtereinrichtung nach einem der Ansprüche 3 bis 6, **dadurch gekennzeichnet, daß** die Wärmeleitfähigkeit der Kontaktschichten im wesentlichen gleich der der ersten und/oder zweiten Filterelemente (2 bis 6; 13 bis 20; 22 bis 25) ist.

8. Filtereinrichtung nach einem der Ansprüche 1 bis 7, **dadurch gekennzeichnet, daß** das bzw. die erste(n) Filterelement(e) (2, 12) mittig angeordnet ist bzw. sind.

9. Filtereinrichtung nach einem der Ansprüche 1 bis 7, **dadurch gekennzeichnet, daß** die ersten Filterelemente (22, 23) in der Filterelementgruppe (21) verteilt angeordnet sind.

10. Filtereinrichtung nach einem der Ansprüche 1 bis 9, **dadurch gekennzeichnet, daß** das bzw. die erste(n) Filterelement(e) (2, 12, 22, 23) von den zweiten Filterelementen (3 bis 6; 13 bis 20; 24, 25) umgeben ist bzw. sind.

11. Filterereinchtung nach einem der Anspruche 1 bis 10, **dadurch gekennzeichnet, daß** die Wärmeleitfähigkeit der zweiten Filterelemente (3 bis 6; 13 bis 20; 24, 25) größer oder kleiner ist als die des ersten Filterelements (1, 12) bzw. der ersten Filterelemente (22, 23).

12. Filtereinrichtung nach einem der Ansprüche 1 bis 11, **dadurch gekennzeichnet**, die Filterelemente (2 bis 6; 12 bis 20; 22 bis 25) nebeneinander und sich abwechselnde Einströmkanäle und Ausströmkanäle aufweisen, die durch poröse, filterwirksame Längswandungen getrennt sind, wobei die Einströmkanäle einströmseitig offen und abströmseitig geschlossen und die Ausströmkanäle einströmseitig geschlossen und abströmseitig offen sind.

13. Filtereinrichtung nach Anspruch 12, **dadurch gekennzeichnet, daß** die Einström- und Ausströmkanäle rechteckigen Querschnitt haben.

14. Filtereinrichtung nach einem der Ansprüche 1 bis 13, **dadurch gekennzeichnet, daß** die Außenwandung der Filterelemente (2 bis 6; 12 bis 20; 22 bis 25) partikeldicht, insbesondere gasdicht ausgebildet sind.

15. Filtereinrichtung nach einem der Ansprüche 1 bis 14, **dadurch gekennzeichnet, daß** die Außenwandungen der Filterelemente (2 bis 6; 12 bis 20; 22 bis 25) rechteckigen, quadratischen, ovale, runden und/oder schalenförmigen Querschnitt haben.

16. Filtereinrichtung nach einem der Ansprüche 1 bis 15, **dadurch gekennzeichnet, daß** die Filterelementgruppe(n) (1, 11, 21) von einem Gehäuse mit einem Gasein- und einem Gasauslass umschlossen ist bzw. sind.

17. Filtereinrichtung nach Anspruch 16, **dadurch gekennzeichnet, daß** mehrere Filterelementgruppen (1, 11, 21) vorhanden sind und jede Filterelementgruppe (1, 11, 21) von einem eigenen Gehäuse umgeben ist.

18. Filtereinrichtung nach einem der Ansprüche 1 bis 17, **dadurch gekennzeichnet, daß** die Filterelemente (2 bis 6; 12 bis 20; 22 bis 25) und gegebenenfalls die keramischen Kontaktschichten im wesentlichen den gleichen Ausdehnungskoeffizienten über den Betriebstemperaturbereich aufweisen.

## Claims

1. A filter device having filter elements (2 to 6; 12 to 20; 22 to 25) made of ceramic material which are combined in at least one filter element group (1, 11, 21) in which the filter elements (2 to 6; 12 to 20; 22 to 25) lie side by side next to one another and can be flowed through in parallel, wherein each filter element group (1, 11, 21) comprises first and second filter elements (2 to 6; 12 to 20; 22 to 25) and the first element(s) (2, 12, 22, 23) has/have electrical terminals for connection with an electrical energy source and is/are made of electrically conductive ceramic material, **characterised in that** the second filter elements (3 to 6, 13 to 20; 24, 25) consist of a ceramic material, which is not electrically conductive or have a lower electrical conductivity than the ceramic material of the first filter element(s) (2, 12, 22, 23).

2. A filter device defined in claim 1, wherein the second filter element(s) (3 to 6; 13 to 20; 24, 25) lying side by side to the first filter element(s) (2, 12, 22, 23) have electrically conductive contact to the first filter element(s) (2, 12, 22, 23).

3. A filter device having filter elements (2 to 6; 12 to 20; 22 to 25) made of ceramic material which are combined in at least one filter element group (1, 11, 21) in which the filter elements (2 to 6; 12 to 20; 22 to 25)(2 to 6; 12 to 20; 22 to 25) lay side by side next to one another and can be flowed through in parallel, wherein each filter element group (1, 11, 21) comprises first and second filter elements (2 to 6; 12 to 20; 22 to 25) and the first filter element(s) (2, 12, 22, 23) has/have electrical terminals for connection with an electrical energy source and is/are made of electrically conductive ceramic material, **characterized in that** the first filter element(s) (2 to 6; 12 to 20; 22 to 25) is/are separated from the second filter element by contact layers, which are not conductive or have a lower electrical conductivity than the ceramic material of the first filter element(s) (2, 12, 22, 23).

4. A filter device as defined in claim 3, wherein the contact layers are made of the same ceramic base material than the filter elements (2 to 6; 12 to 20; 22 to 25).

5. A filter device as defined in claim 3 or 4, wherein the contact layers connect the filter elements (2 to 6; 12 to 20; 22 to 25).

6. A filter device as defined in one of claims 3 to 5, wherein the contact layers are configured as separate layers with no material connection to the filter elements (2 to 6; 12 to 20; 22 to 25).

7. A filter device as defined in one of claims 3 to 6, wherein the thermal conductivity of the contact layers is of the same order of magnitude as that of the first and/or second filter elements (2 to 6; 12 to 20; 22 to 25).

8. A filter device as defined in one of claims 1 to 7, wherein the first filter element(s) (2, 12) is/are arranged at the center.

9. A filter device as defined in one of claims 1 to 7, wherein the first filter elements (22, 23) are arranged in distributed fashion in the filter element group (21).

10. A filter device as defined in one of claims 1 to 9, wherein the first filter element(s) (2, 12, 22, 23) is/are surrounded by the second filter elements (3 to 6; 13 to 20; 24, 25).

11. A filter device as defined in one of claims 1 to 10, wherein the thermal conductivity of the second filter elements (3 to 6; 13 to 20; 24, 25) is greater than or less than that of the first filter element(s) (1, 12, 22, 23).

12. A filter device as defined in one of claims 1 to 11, wherein the filter elements (2 to 6; 12 to 20; 22 to 25) comprise, next to and alternating with one another, inflow conduits and outflow conduits that are separated by porous, filtrationally effective longitudinal walls, the inflow conduits being open on the inflow side and closed on the outflow side, and the outflow conduits being closed on the inflow side and open on the outflow side.

13. A filter device as defined in claim 12, wherein the inflow and outflow conduits have a square cross section.

14. A filter device as defined in one of claims 1 to 13, wherein the outer walls of the filter elements (2 to 6; 12 to 20; 22 to 25) are of particle-tight, in particular gas-tight, configuration.

15. A filter device as defined in one of claims 1 to 14, wherein the outer walls of the filter elements (2 to 6; 12 to 20; 22 to 25) have a rectangular, square, oval, round and/or shall-shaped cross section.

16. A filter device as defined in one of claims 1 to 15, wherein the filter element group(s) (1, 11, 21) is/are surrounded by a housing having a gas inlet and a gas outlet.

17. A filter device as defined in claim 16, wherein multiple filter element groups (1, 11, 21) are present and each filter element group (1, 11, 21) is surrounded by a separate housing.

18. A filter device as defined in one of claims 1 to 17, wherein the filter elements (2 to 6; 12 to 20; 22 to 25) and if applicable the contact layers have substantially the same expansion coefficients over the operating temperature range.

## Revendications

1. Dispositif de filtration avec des éléments filtrants (2 à 6 ; 12 à 20 ; 22 à 25) en matériau céramique, lesquels sont regroupés en au moins un groupe d'éléments filtrants (1, 11, 21), dans lequel les éléments filtrants (2 à 6 ; 12 à 20 ; 22 à 25) sont disposés côte à côte et traversés en parallèle, chaque groupe d'éléments filtrants (1, 11, 21) présentant des premiers et des deuxièmes éléments filtrants (2 à 6 ; 12 à 20 ; 22 à 25) et le ou les premier(s) élément(s) filtrant(s) (2, 12, 22, 23) présentant des connexions électriques pour le raccordement à une source d'énergie électrique et étant constitué(s) d'un matériau céramique électroconducteur, **caractérisé par le fait que** les deuxièmes éléments filtrants (3 à 6 ; 13 à 20 ; 24, 25) sont constitués d'un matériau céramique non conducteur ou moins conducteur que le matériau céramique des premiers éléments filtrants (2, 12, 22, 23).

2. Dispositif de filtration selon la revendication 1, **caractérisé par le fait que** les deuxièmes éléments filtrants (3 à 6 ; 13 à 20 ; 24, 25) reposant contre le ou les premier(s) élément(s) filtrant(s) (2, 12, 22, 23) sont en contact électrique avec le ou les premier(s) élément(s) filtrant(s) (2, 12, 22, 23).

3. Dispositif de filtration avec des éléments filtrants (2 à 6 ; 12 à 20 ; 22 à 25) en matériau céramique, lesquels sont regroupés en au moins un groupe d'éléments filtrants (1, 11, 21), dans lequel les éléments filtrants (2 à 6 ; 12 à 20 ; 22 à 25) sont disposés côte à côte et traversés en parallèle, chaque groupe d'éléments filtrants (1, 11, 21) présentant des premiers et des deuxièmes éléments filtrants (2 à 6 ; 12 à 20 ; 22 à 25) et le ou les premier(s) élément(s) filtrant(s) (2, 12, 22, 23) présentant des connexions électriques pour le raccordement à une source d'énergie électrique et étant constitué(s) d'un matériau céramique électroconducteur, **caractérisé par le fait que** les premiers et les deuxièmes éléments filtrants (2 à 6 ; 12 à 20 ; 22 à 25) sont séparés par des couches de contact non conductrices ou moins conductrices que le matériau céramique des premiers éléments filtrants (2, 12, 22, 23).

4. Dispositif de filtration selon la revendication 3, **caractérisé par le fait que** les couches de contact sont constituées du même matériau de base céramique que les éléments filtrants (2 à 6; 12à20;22à25).

5. Dispositif de filtration selon la revendication 3 ou 4, **caractérisé par le fait que** les couches de contact relient les éléments filtrants (2 à 6 ; 12 à 20 ; 22 à 25).

6. Dispositif de filtration selon l'une des revendications 3 à 5, **caractérisé par le fait que** les couches de contact sont formées de couches séparées sans liaison matérielle avec les éléments filtrants (2 à 6 ; 12 à 20 ; 22 à 25).

7. Dispositif de filtration selon l'une des revendications 3 à 6, **caractérisé par le fait que** la conductibilité thermique des couches de contact est essentiellement identique à celle des premiers et/ou deuxièmes éléments filtrants (2 à 6 ; 12 à 20 ; 22 à 25).

8. Dispositif de filtration selon l'une des revendications 1 à 7, **caractérisé par le fait que** le ou les premier(s) élément(s) filtrant(s) (2, 12) est/sont en position centrale.

9. Dispositif de filtration selon l'une des revendications 1 à 7, **caractérisé par le fait que** les premiers éléments filtrants (22, 23) sont répartis dans le groupe d'éléments filtrants (21).

10. Dispositif de filtration selon l'une des revendications 1 à 9, **caractérisé par le fait que** le ou les premier(s) élément(s) filtrant(s) (2, 12, 22, 23) est/sont entouré(s) par les deuxièmes éléments filtrants (3 à 6 ; 13 à 20 ; 24, 25).

11. Dispositif de filtration selon l'une des revendications 1 à 10, **caractérisé par le fait que** la conductibilité thermique des deuxièmes éléments filtrants (3 à 6 ; 13 à 20 ; 24, 25) est supérieure ou inférieure à celle du premier élément filtrant (1, 12) ou des premiers éléments filtrants (22, 23).

12. Dispositif de filtration selon l'une des revendications 1 à 11, **caractérisé par le fait que** les éléments filtrants (2 à 6 ; 12 à 20 ; 22 à 25) présentent côte à côte et en alternance des canaux d'entrée et des canaux de sortie séparés par des parois longitudinales poreuses filtrantes, les canaux d'entrée étant ouverts côté entrée et fermés côté sortie et les canaux de sortie étant fermés côté entrée et ouverts côté sortie.

13. Dispositif de filtration selon la revendication 12, **caractérisé par le fait que** les canaux d'entrée et de sortie ont une section rectangulaire.

14. Dispositif de filtration selon l'une des revendications 1 à 13, **caractérisé par le fait que** la paroi extérieure des éléments filtrants (2 à 6 ; 12 à 20 ; 22 à 25) est étanche aux particules, en particulier étanche aux gaz.

15. Dispositif de filtration selon l'une des revendications 1 à 14, **caractérisé par le fait que** les parois extérieures des éléments filtrants (2 à 6 ; 12 à 20 ; 22 à 25) ont une section rectangulaire, carrée, ovale, ronde et/ou en cuvette.

16. Dispositif de filtration selon l'une des revendications 1 à 15, **caractérisé par le fait que** le(s) groupe(s) d'éléments filtrants (1, 11, 21) est/sont entouré(s) par un boîtier comportant une entrée et une sortie de gaz.

17. Dispositif de filtration selon la revendication 16, **caractérisé par le fait que** plusieurs groupes d'éléments filtrants (1, 11, 21) sont présents et que chaque groupe d'éléments filtrants (1, 11, 21) est entouré par un boîtier.

18. Dispositif de filtration selon l'une des revendications 1 à 17, **caractérisé par le fait que** les éléments filtrants (2 à 6 ; 12 à 20 ; 22 à 25) et le cas échéant les couches de contact céramiques présentent essentiellement le même coefficient de dilatation dans la plage de température de service.
